(19)

**Europäisches Patentamt**
**European Patent Office**
**Office européen des brevets**

(11) **EP 4 567 672 A1**

(12) **EUROPEAN PATENT APPLICATION**

(43) Date of publication:
**11.06.2025 Bulletin 2025/24**

(21) Application number: **24217619.6**

(22) Date of filing: **04.12.2024**

(51) International Patent Classification (IPC):
**G06N 3/0464** (2023.01)    **G06N 3/084** (2023.01)
**G06N 10/60** (2022.01)    **G06V 10/36** (2022.01)
**G06N 10/40** (2022.01)

(52) Cooperative Patent Classification (CPC):
**G06N 10/60; G06N 3/0464; G06N 3/084;
G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 EP 23214623
19.04.2024 EP 24171385
27.08.2024 EP 24196605
15.10.2024 EP 24206761**

(71) Applicant: **Kipu Quantum GmbH
76137 Karlsruhe (DE)**

(72) Inventors:
• **SIMEN ALBINO, Anton
10407 Berlin (DE)**
• **HEGADE, Narendra Narayana
560099 Karnataka (IN)**
• **MONTALBAN, Iraitz
76137 Karlsruhe (DE)**

• **MICHON, Eric
10437 Berlin (DE)**
• **ZHANG, Qi
10437 Berlin (DE)**
• **VIVES-GILABERT, Yolanda
03750 Pedreguer (ES)**
• **SOLANO, Enrique
10405 Berlin (DE)**
• **MARTIN-GUERRERO, José
46100 Burhassot (ES)**
• **KUMAR, Shubham
10405 Berlin (DE)**
• **DALAL, Archismita
13055 Berlin (DE)**
• **GOMEZ CADAVID, Alejandro
13187 Berlin (DE)**
• **FLORES-GARRIGÓS, Carlos
03003 Alicante (ES)**

(74) Representative: **Sonnenberg Harrison
Partnerschaft mbB
Herzogspitalstraße 10a
80331 München (DE)**

(54) **QUANTUM DIGITAL-ANALOG CONVOLUTIONS FOR IMAGE CLASSIFICATION**

(57) The invention pertains to a computer-implemented method for generating a dataset of quantum-generated images configured to be used to train a Convolutional Neural Network for image classification.

Figure 6

100

| 110 – Acquiring at least one plurality of images |
| 120 – For each image of the plurality of images, dividing the image into a plurality of sections |
| 121 – For each section of the plurality of sections of the image, creating a quantum kernel configured to convolve the plurality of sections |
| 122 – Encoding a section into a plurality of local fields of a first Hamiltonian of a set of qubits |
| 123 – Evolving the second Hamiltonian according to the first Hamiltonian |
| 124 – Determining the ground state of the second Hamiltonian |
| 125 – Creating at least one quantum-generated section |
| 126 – Obtaining a plurality of quantum-generated sections |
| 127 – Combining the plurality of quantum-generated sections |
| 130 – Generating a dataset of the quantum-generated images |

**Description**

**Field**

The invention relates to quantum computing, in particular to dataset preparation for artificial intelligence.

**Background**

Image classification plays an important role in various fields such as healthcare, finance, and signal processing. Traditional methods for image classification rely on classical computers, which can be computationally intensive, especially when dealing with large datasets or complex patterns. Quantum computing, leveraging the principles of quantum mechanics, offers a promising solution to address these challenges.
It is therefore an objective of the present invention to present a quantum solution and to overcome at least in part the disadvantages of the prior art.

**Summary**

The present invention overcomes at least some drawbacks present in prior art solutions.
According to one aspect, the present invention relates to a method for generating a dataset comprising quantum-generated images, this dataset being configured to be used to train at least one Convolutional Neural Networks, preferably for image classification.
According to another aspect, the present invention relates to a computer-implemented method for generating a dataset comprising quantum-generated images, using a quantum processing unit and a classical processing unit, the quantum processing unit comprising a plurality of qubits, the method comprising:

A. Acquiring at least one plurality of images, using at least one communication module, each image of the plurality of images comprising at least one associated data;
B. For each image of the plurality of images, dividing the image into a plurality of sections, using the classical processing unit, each sections of the plurality of sections comprising a plurality of pixels ;

I. For each section of the plurality of sections of the image, creating a quantum kernel configured to convolve the plurality of sections, using the quantum processing unit, the creating step of the quantum kernel comprising the following steps:

a. Encoding a section into a plurality of local fields of a first Hamiltonian of a set of qubits of the plurality of qubits of the quantum processing unit, wherein each pixel of the plurality of pixels of the section is encoded into at least one local field of the plurality of local fields, encoding each pixel value into at least one local field comprising:

1. Applying a set of exciting pulses using a pulse generation module, each exciting pulse being associated with at least one qubit of the set of qubits, the set of exciting pulses being configured to :

- modify the plurality of local fields of the first Hamiltonian of the set of qubits to encode each pixel value into at least one local field, generating a second Hamiltonian;
- for each qubit of the set of qubit, generate entanglement with at least one another qubit of the set of qubits, using a predetermined topology of entanglement based on the connectivity of the qubits provided by the set of qubits;

b. Evolving the second Hamiltonian according to the first Hamiltonian, using a quantum annealing process and the quantum processing unit, the first Hamiltonian being configured to govern the evolution of the set of qubits;
c. Determining the ground state of the second Hamiltonian by measuring the expectation value of each qubit of the set of qubits in response to the second Hamiltonian stopping its evolution, using at least one measurement module;
d. Creating at least one quantum-generated section using the expectation value of each qubit of the set of qubits as a pixel value of this quantum-generated section;

II. Obtaining a plurality of quantum-generated sections based on the plurality of sections of the image;

III. Combining, using the classical processing unit, the plurality of quantum-generated sections to generate at least one quantum-generated image ;

C. Generating a dataset of the quantum-generated images, using the classical processing unit.

According to another aspect, the present invention relates to a computer product program for generating a dataset comprising quantum-generated images which, when executed by at least one processing unit, executes the method according to the present invention.

According to another aspect, the present invention relates to a non-volatile memory comprising at least one computer program product according to the present invention.

According to another aspect, the present invention relates to a system configured to generate a dataset comprising quantum-generated images, the system comprising at least:

A. One communication module configured to acquire a plurality of images;

B. One classical processing unit configured to:

I. divide an image into a plurality of sections, each section comprising a plurality of pixels;
II. combine a plurality of quantum-generated sections to generate at least one quantum-generated image;
III. generate a dataset of quantum-generated images;

C. One quantum processing unit comprising a plurality of qubits and being configured to:

I. create a quantum kernel configured to convolve a plurality of sections;
II. encode a section into a plurality of local fields of a first Hamiltonian of a set of qubits of the plurality of qubits, wherein each pixel of the plurality of pixels of the section is encoded into at least one local field of the plurality of local fields;
III. evolve a second Hamiltonian according to a first Hamiltonian, using a quantum annealing process, the first Hamiltonian being configured to govern the evolution of the set of qubits;

D. One pulse generation module configured to:

I. apply a set of exciting pulses, each exciting pulse being associated with at least one qubit of the set of qubits, the set of exciting pulses being configured to :

a. modify the plurality of local fields of the first Hamiltonian of the set of qubits to encode each pixel value of a plurality of pixel values into at least one local field, generating the second Hamiltonian;
b. for each qubit of the set of qubit, generate entanglement with at least one another qubit of the set of qubits, using a predetermined topology of entanglement based on the connectivity of the qubits provided by the set of qubits;

E. One measurement module configured to measure the expectation value of each qubit of the set of qubits.

According to another aspect, the present invention relates to the use of the present invention for classifying a medical image in a first class or in a second class, the first class corresponding to the presence of a cancer, the second class corresponding to an absence of cancer.

According to another aspect, the present invention relates to the use of a dataset generated by the present invention, for training a classical Convolutional Neural Network for image classification.

Before providing below a detailed review of certain embodiments of the invention, some optional characteristics that may be used in association or alternatively will be listed hereinafter:
According to an example, the generated dataset is configured to train at least one classical Convolutional Neural Network for image classification.

According to an example, the present invention comprises, after generating the dataset, for each quantum-generated image of the plurality of images, associating the associated data of each image of the plurality of images with its corresponding quantum-generated image.

According to an example, the present invention comprises, after generating the dataset, a step of training at least one classical Convolutional Neural Network, using a classical processing unit, using the plurality of quantum-generated images and the associated data of the plurality of images to recognize patterns and/or perform image classification tasks.

According to an example, the present invention comprises, after training the classical Convolutional Neural Network, a step of classifying at least one image using the trained classical Convolutional Neural Network.

According to an example, the present invention comprises, before the step of classifying, a step of acquiring an image to be classified, using the communication module.

According to an example, the number of qubits of the set of qubits is equal or higher than the number of pixels of the section.

According to an example, the exciting pulses comprises at least one of a microwave pulse or a laser pulse.

According to an example, the plurality of qubits comprises at least one of neutral atoms, trapped ions, superconducting circuits or photons.

According to an example, the predetermined topology of entanglement is related to the nature of the plurality of qubits.

According to an example, the exciting pulses are applied adiabatically.

According to an example, the expectation value are measured when the qubit reaches its ground state.

According to an example, the evolution of the Hamiltonian is stopped when the Hamiltonian reaches its ground state.

According to an example, the quantum annealing process is implemented by at least one quantum annealing device.

According to an example, the quantum kernel is a digital quantum kernel or a digital-analog quantum kernel.

According to an example, the set of exciting pulses is further configured to generate a quantum circuit made of the qubits of the set of qubits.

## Brief description of the drawings

For a better understanding of the present invention, as well as other aspects and further features thereof, reference is made to the following description which is to be used in conjunction with the accompanying drawings, which show:

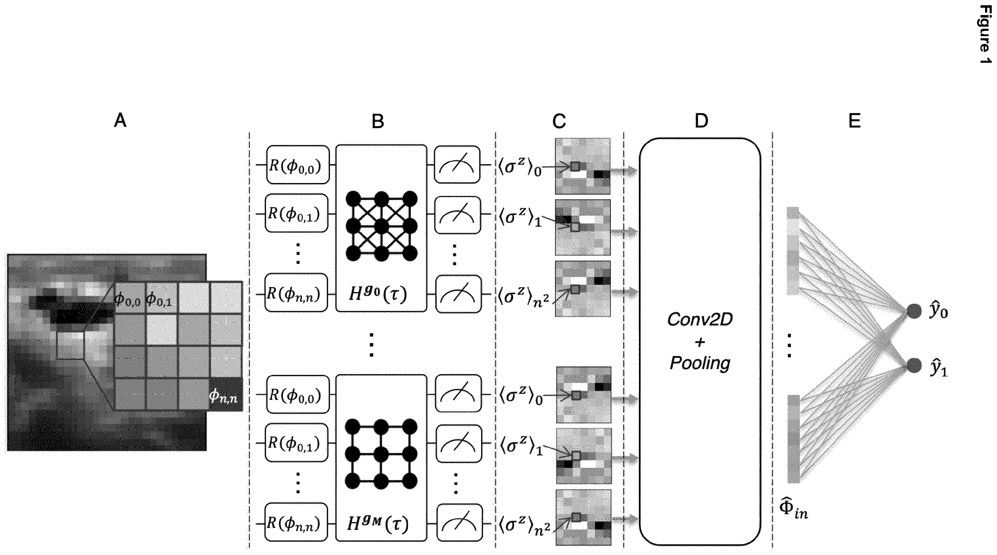

Figure 1: Convolutions with single and multi-DAQK (digital analog quantum kernels). According to an embodiment, figure 1 illustrates a digital-analog quantum convolution applied to the original (input) image. (A) the original image with highlighted target pixels denoted as $\Phi = \{\phi_{0,0}, \phi_{0,1} \ldots \ldots \phi_{n,n}\}$, where the convolution will take place. These $n^2$ pixels undergo DAQK (B), composed by single-qubit rotations, $R((\phi_{i,j})$, analog blocks, $H^{gj}(\tau)$, and measurements in the computational basis. One or more analog blocks $H(\tau)$ with different graph connectivity, $\mathbf{g}$, can be applied (single and multi-DAQK, respectively). (C) Expectation values of single-body observables, $\langle\sigma^z\rangle_i$, are computed, which will be utilized in generating new images with reduced dimensions. (D) The quantum-generated images go through standard convolutional and pooling layers, from where the resulting images are (E) flattened as an input vector, $\hat{\Phi}_{in}$, and passed to a dense trainable layer whose outputs, $\hat{y}_0$, and $\hat{y}_1$, estimate the target binary variables.

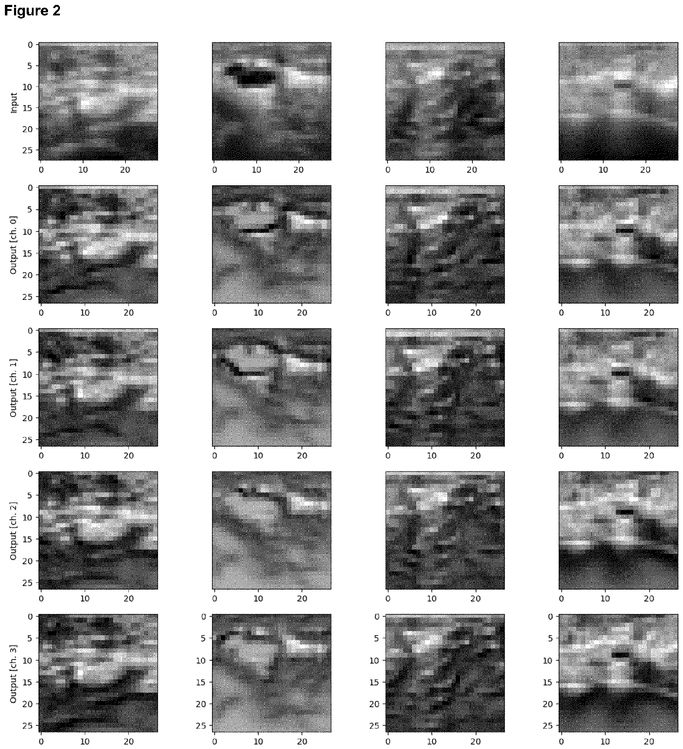

Figure 2: Figure 2 illustrates 4 new images according to an embodiment of the present invention. Hyperparameters and layers: The kernel size employed was 2x2 (corresponding to 4 qubits in the case of the quantum layer), with a stride of 2 (the kernel is applied by skipping 2 pixels at a time). The pixel values traverse through the digital-analog quantum circuit, and the expected value of an observable in each qubit (channel) is individually measured. These values are then stored in new images (4 new images, as 4 qubits were measured, as showed in Figure 2). Subsequently, these 4 new images are flattened and passed through a classical dense neural network with 2 fully-connected hidden layers. The classical counterpart contains the same configuration, except that a classical convolutional layer is applied in the raw image instead of a quantum one.

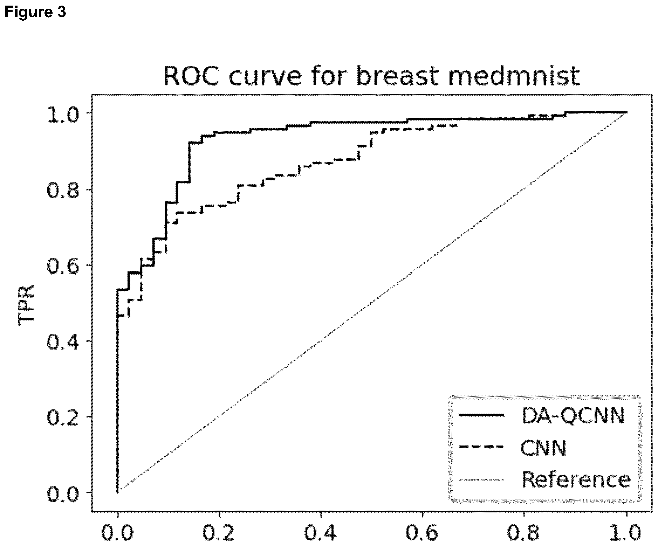

Figure 3: To assess the method's performance and compare it with the results of a public benchmark, the evaluated metrics included Area Under the ROC Curve (AUC) and test accuracy (ACC). According to an embodiment, figure 3 illustrates the ROC curve, and Table 1 presents the method performances. It can be observed that the method of the invention using a digital-analog quantum layer outperforms the values obtained from a benchmark available on the MedMNIST website.

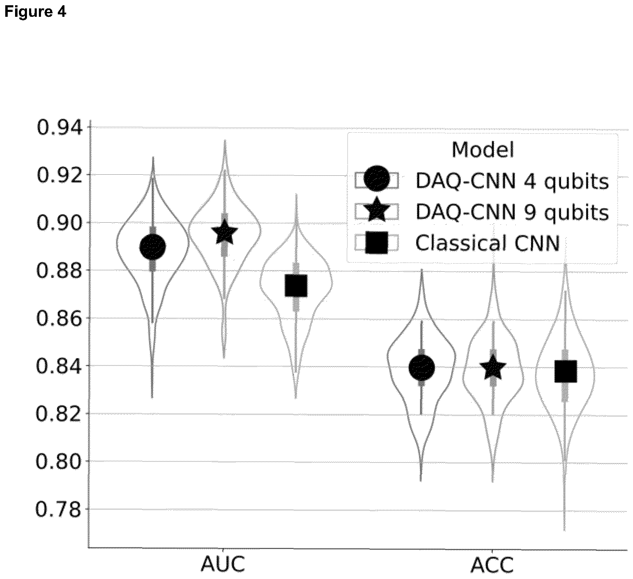

Figure 4: According to an embodiment of the present invention, figure 4 illustrates statistical results to demonstrate the robustness of the digital-analog quantum method compared to its equivalent classical. The violin plot shows results for AUC and test ACC. The quantum kernels used were with size of 2x2 and 3x3 (4 and 9 qubits, respectively). Also, for these simulations were created four different quantum kernels for each case, by varying the qubit connectivity.

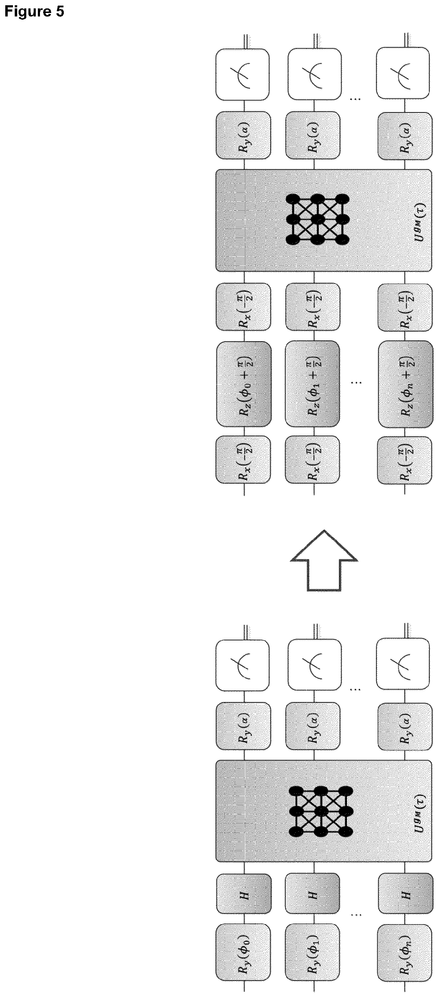

Figure 5: Figure 5 illustrates how to transform the locally-addressed Ry rotations into locally-addressed Rz rotations, according to an embodiment of the present invention.

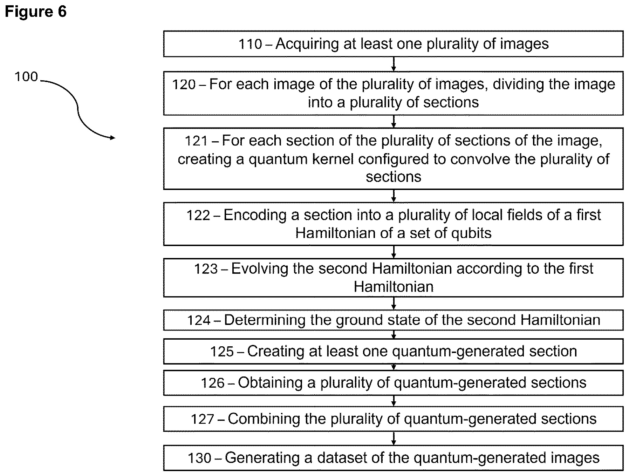

Figure 6: Figure 6 illustrates a flow chart of a method according to an embodiment of the present invention.

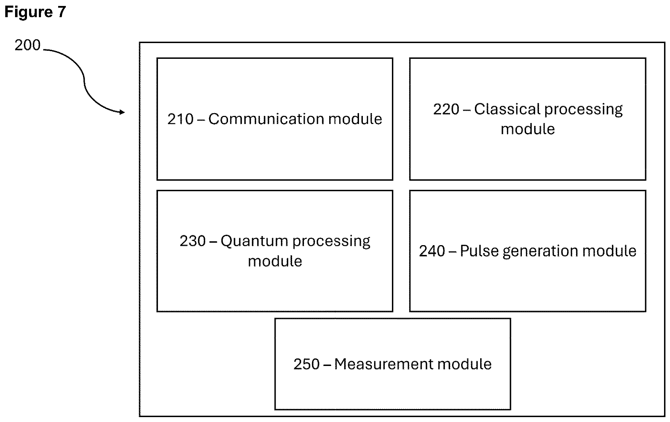

Figure 7: Figure 7 illustrates a system according to an embodiment of the present invention.

**Short Description of the Invention**

This short description is provided to introduce a selection of concepts in a simplified form that are further described below in the detailed description and the examples. This summary is not intended to identify key features of the invention, nor is it intended to be used to limit the scope of the invention.

The object of the invention is to provide an improved way for image classification using a digital or a digital-analog quantum computer.

In a first aspect, the invention pertains to a computer-implemented method for image classification (in particular of medical images) using a quantum computer comprising a quantum processing unit (QPU) with a plurality of qubits and a central processing unit (CPU).

In certain embodiments, the method for image classification comprises:

- Encoding an input image (an original image) into digital, single-qubit blocks in the form of digital, single-qubit gates in the QPU of the quantum computer, wherein each pixel of an input image is encoded into a single qubit from the plurality of qubits;

- Using analog blocks provided by the QPU of the quantum computer (as native) to create entanglement among the qubits;

- Generating a new image (also referred to as a "latent representation") of the (original) input image. This step may comprise:

   a) Using single or multiple digital analog quantum kernels (DAQK) by varying the topologies of the entangled qubits, and
   b) measuring an observable of each qubit of the plurality of entangled qubits individually and computing an expectation value from the measured observable, in particular from probability distributions, wherein the measured observable is encoded into pixels of the new image to allow for the detection of different characteristics of the original image. The detected characteristics are present on the new generated images. For example, a particular convolution can detect circular edges in the original image. It leads to a new image where the circular edges are highlighted. Several other more complex characteristics can be detected by a convolution; and

- Providing the new image as input to train a machine learning model, such as a classical Convolutional Neural Network (CNN) to classify the original input image using the detected characteristics of the original input image. The CNN is trained with the new images generated by the quantum convolutions.

According to an embodiment, once the CNN is trained, the trained CNN is used in the method to classify the input images. For that purpose, the new images are provided to the CNN as input and the CNN is run as described herein.

According to an embodiment, the use of analog blocks provided by the QPU of the quantum computer as native allows to create entanglement among the plurality of qubits. Ion certain embodiments, all the qubits are being entangled. In other embodiments, only a fraction of the qubits are being entangled.

According to an embodiment, varying the topologies of the entangled qubits may be done by applying multiple digital-analog quantum kernels (DAQK) to convolve the original input images. A single DAQK is responsible to generate a set of new, convolved images, from one of the original input images. Applying multiple DAQKs by varying the topology of the entanglement of the DAQK generates a large number of convolved images.

According to an embodiment, Single or multiple digital analog quantum kernels (DAQK) are used which leads to the generation of a larger number of new, convolved images. This leads to an increased detection of characteristics.

According to an embodiment, Using single or multiple digital analog quantum kernels (DAQK) and varying the topologies of the entangled qubits are interconnected, because each DAQK has a different entanglement topology.

In certain embodiments, the method comprises training the classical Convolutional Neural Network with a training set of images wherein the training images are convolved using DAQKs. The training set of images may contain 2 to 50 images, in particular 5 to 30, for example 10 to 15 input images.

In certain embodiments, the convolving of the training images using DAQKs comprises one or more of the following steps a to g:

a. Using at least one digital-analog quantum kernel as the main component for processing image data using quantum circuits. Unlike traditional convolutional neural networks (CNNs) that use trainable matrices as kernels, this approach utilizes digital-analog quantum circuits.

b. Performing a Quantum Convolution: The quantum kernel performs convolutions on images from a training set. This involves processing the image data through quantum circuits designed specifically for convolutional operations.

c. Measurement of a Quantum Circuit: After the convolution operation is performed on the quantum circuits, the next step involves measuring the quantum circuit. Measurements collapses the quantum state of each qubit, resulting in an observable value.

d. Expectation Value of a Single-Body Observable: From each measured qubit, an expectation value of a single-body observable is obtained.

e. Encoding Information into New Pixels: The expectation values obtained from the measured qubits are then encoded into new pixels. These new pixels constitute the convolved images.

f. Responsibility of Each Qubit: Each qubit measured in the quantum circuit is responsible for generating specific convolved images. The expectation values obtained from the measurement of each qubit contribute to the creation of the convolved images.

g. Applying Multiple Circuits: Additionally, in certain embodiments, more than one quantum circuit is applied by varying the entanglement topology. This variation in the entanglement topology leads to the generation of multiple convolved images, each reflecting a different aspect or feature of the input image data.

By following the above-given steps, the digital-analog quantum kernel effectively performs convolutions on image data, leveraging quantum circuits and measurement processes to encode information into new pixels and generate convolved images.

According to an embodiment, the same sequence may be used to convolve the input image.

In certain embodiments, convolving the training images using DAQKs comprises the steps of scanning each image from a training set with DAQK in order to generate the new, i.e. convolved images. The number of new images grows with the number of qubits measured as well as the number of DAQKs used.

In certain embodiments, the analog blocks include multi-qubit interactions native to the quantum processing unit (QPU).

In certain embodiments of the method, the digital, single-qubit blocks are generated using electromagnetic pulses. This can be done by applying the pulses on the qubits individually. This operation changes the state of the qubits and it is equivalent to a single-qubit quantum gate.

In certain embodiments of the method, a quantum digital block, for example realized by single-qubit rotations, and/or an analog block is implemented over a kernel size of nxn, wherein n is the number of rows or column of the kernel and corresponding to a specific number of qubits in a quantum layer is nxn = $n^2$.

In certain embodiments, the method comprises:
Convolving a portion of the input image in the form of input pixels in the quantum computer by applying at least one convolving layer of the pixels to subgroups of the plurality of input qubits, wherein the size of each subgroup of the plurality of input qubits is equal to the number of pixels of the image portion.

In certain embodiments, the method comprises performing a measurement of the state of at least some of the qubits on which a digital analog quantum convolutional layer was applied. The number of qubits measured dictates the number of convolved images generated by each original image.

In certain embodiments of the method, the quantum computer on which the method is performed uses neutral atoms, trapped ions, superconducting circuits and/or photons.

In a second aspect, the invention pertains to a data processing apparatus/device/system comprising means for carrying out [the steps of] the method described herein.

In certain embodiments, the invention refers to a data processing system (which may also be referred to as an image classification system) comprising means for carrying out [the steps of] the method described herein, in particular comprising:

-  A quantum processor (in particular a quantum processing unit (QPU)) configured to implement digital-analog quantum convolutions whose analog part is native to a quantum computer used, in particular to a neutral atom quantum computer;

- A memory storing instructions for applying a quantum operation derived from a Hamiltonian, in particular from a Rydberg Hamiltonian to images, in particular medical images;
- A classical processor configured to receive quantum measurement data and integrate it with a classical convolutional neural network for image classification; and/or
- An output interface configured to display classification results based on the quantum-processed images, in particular medical images.

In certain embodiments, the invention refers to a data processing system, wherein the digital-analog blocks are configured for entanglement patterns that enhance the convolution of input data for the extraction of particular features.

In a third aspect, the invention pertains to a computer program [product] comprising instructions which, when the program is executed by a computer, cause the computer to carry out [the steps of] the method described herein.

In a fourth aspect, the invention pertains to a computer-readable [storage] medium comprising instructions which, when executed by a computer, cause the computer to carry out [the steps of] the method described herein.

In a fifth aspect, the invention pertains to the use of the method as described herein for classifying a medical input image as showing a malignant cancer or not.

In a sixth aspect, the invention pertains to the use of a plurality of quantum generated images, in particular as described above and herein, for training a classical Convolutional Neural Network (CNN) for image classification.

Other features and advantages of the invention will be apparent upon reading the detailed description and examples and reviewing the accompanying drawings of the figures.

## Detailed Description of the Invention

In the context of the present invention, "object detection" may refer to a computer technology related to computer vision and image processing that deals with detecting instances of semantic objects of a certain class in digital images and/or videos.

In the context of the present invention, "computer vision" may refer to a field of artificial intelligence (AI) enabling computers to derive information from images and videos.

In the context of the present invention, "image classification" may refer to categorization and labeling of different groups of images.

In the context of the present specification, "device" is any computer hardware that is capable of running software appropriate to the relevant task at hand. Thus, some (non-limiting) examples of devices include personal computers (desktops, laptops, netbooks, etc.), smartphones, and tablets, as well as network equipment such as routers, switches, and gateways. It should be noted that a device acting as a device in the present context is not precluded from acting as a server to other devices. The use of the expression "a device" does not preclude multiple devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers. It can be said that a database is a logically ordered collection of structured data kept electronically in a computer system.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, labels, etc.), documents, spreadsheets, lists of words, etc.

In the context of the present specification, the expression "component" or "module" is meant to include software (appropriate to a particular hardware context) that is both necessary and sufficient to achieve the specific function(s) being referenced.

In the context of the present specification, the expression "computer usable information storage medium" or "non-volatile memory" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first module" and "third module" is not intended to imply any particular order, type, chronology, hierarchy or ranking (for example) of/between the modules, nor is their use (by itself) intended imply that any "second module" must necessarily exist in any given situation. Further, as is discussed herein in other contexts, reference to a "first" element and a "second" element does not preclude the two elements from being the same actual real-world element. Thus, for example, in some instances, a "first" module and a "second" module may be the same software and/or hardware, in other cases they may be different software and/or hardware.

Additional and/or alternative features, aspects and advantages of implementations of the present invention will become apparent from the following description, the accompanying drawings and the appended claims.

The examples and conditional language recited herein are principally intended to aid the reader in understanding the principles of the present invention and not to limit its scope to such specifically recited examples and conditions. It will be appreciated that those skilled in the art may devise various arrangements which, although not explicitly described or shown herein, nonetheless embody the principles of the present invention and are included within its spirit and scope.

In some cases, what are believed to be helpful examples of modifications to the present invention may also be set forth. This is done merely as an aid to understanding, and, again, not to define the scope or set forth the bounds of the present invention. These modifications are not an exhaustive list, and a person skilled in the art may make other modifications while nonetheless remaining within the scope of the present invention. Further, where no examples of modifications have been set forth, it should not be interpreted that no modifications are possible and/or that what is described is the sole manner of implementing that element of the present invention.

Moreover, all statements herein reciting principles, aspects, and implementations of the present invention, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present invention. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor" or a "processing module" or a "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present invention, the processor may be a general purpose processor, such as a central processing unit (CPU), also called a classical processing unit, or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present invention.

According to an embodiment, the present invention relates to a computer-implemented method for generating a dataset comprising quantum-generated images. This method is designed to utilize both a quantum processing unit (QPU) and a classical processing unit (CPU). The QPU comprises preferably a plurality of qubits.

According to an embodiment, the method begins by acquiring at least one plurality of images using at least one communication module. Said communication module can be configured to receive data from a device or a server across a communication network. Said communication device can comprises a camera. The specific type of communication module used can vary depending on the implementation. For example, it could comprise a wired connection like USB or Ethernet, or a wireless connection like Wi-Fi, Bluetooth, or cellular networks.

According to an embodiment, each image of the plurality of images comprises at least one associated data. These associated data can be a description of the image or of an element in the image, for example. For each image of the plurality of images, the method proceeds to divide the image into a plurality of sections using the classical processing unit. Each section of the plurality of sections comprises a plurality of pixels.

For each section of the plurality of sections of the image, the method creates a quantum kernel configured to convolve the plurality of sections. This step is carried out using the quantum processing unit. The creation of the quantum kernel involves encoding a section into a plurality of local fields of a first Hamiltonian of a set of qubits of the plurality of qubits of the quantum processing unit. Each pixel of the plurality of pixels of the section is encoded into at least one local field of the plurality of local fields.

The encoding process for each pixel value involves applying a set of exciting pulses using a pulse generation module. Each exciting pulse is associated with at least one qubit of the set of qubits. The set of exciting pulses is configured to modify the plurality of local fields of the first Hamiltonian of the set of qubits to encode each pixel value into at least one local field, generating a second Hamiltonian. For each qubit of the set of qubits, entanglement is generated with at least one another qubit of the set of qubits using a predetermined topology of entanglement based on the connectivity of the qubits provided by the set of qubits.

Following this, the second Hamiltonian is evolved according to the first Hamiltonian using a quantum annealing process and the quantum processing unit. The first Hamiltonian is configured to govern the evolution of the set of qubits. The method then determines the ground state of the second Hamiltonian by measuring the expectation value of each qubit of the set of qubits in response to the second Hamiltonian stopping its evolution, using at least one measurement module.

A quantum-generated section is created using the expectation value of each qubit of the set of qubits as a pixel value of this quantum-generated section. A plurality of quantum-generated sections are obtained based on the plurality of sections of the image. The classical processing unit combines these plurality of quantum-generated sections to generate at least one quantum-generated image.

Finally, a dataset of the quantum-generated images is generated using the classical processing unit. This dataset can be used for various purposes, such as training machine learning models or analyzing patterns in images.

According to an embodiment, the method may employ a variety of techniques to optimize the quality and efficiency of the quantum kernel creation process. For instance, the set of exciting pulses may be designed to minimize errors and maximize fidelity during the encoding process. According to an embodiment, the present invention comprises at least one of a microwave pulse generator or a laser pulse generator.

Preferably, the microwave pulse generator is configured to produce electromagnetic waves within the microwave frequency spectrum. In particular, the microwave pulse generator is configured to generate pulses with adjustable amplitude, duration, and repetition rate. Preferably, the laser pulse generator is configured to emit coherent light in the form of pulses. Advantageously, the laser pulse generator can be tuned to specific wavelengths within the visible or non-visible spectrum.

According to an embodiment of the invention, the exciting pulses are applied adiabatically, meaning that the energy of the system remains approximately constant during the application of the pulse. This ensures minimal disturbance to the quantum system's equilibrium state and allows for precise control over the quantum system's dynamics. Preferably, the quantum system is a physical or electronic quantum system, such as an oscillator, a resonator, a qubit or a set of qubits. The choice of system depends on the specific application of the method.

According to an embodiment, the present invention is configured to generate at least one quantum circuit using the set of exciting pulses and the set of qubits. Preferably, the set of exciting pulses is configured to interact with a set of qubits. Advantageously, the interaction between the set of exciting pulses and the set of qubits results in the generation of a quantum circuit. For example, the quantum circuit is made up of the qubits from the set of qubits. The configuration of the set of exciting pulses is preferably such that it can selectively excite specific qubits within the set of qubits to form desired connections in the quantum circuit. Advantageously, the present invention allows for the dynamic and flexible creation of various quantum circuits by adjusting the parameters of the set of exciting pulses, such as their frequency, amplitude, and phase.

The predetermined topology of entanglement may be chosen based on factors such as the connectivity of the qubits, the desired level of entanglement, and the specific task at hand (e.g., image classification, pattern recognition). Preferably, the predetermined topology of entanglement is established among the plurality of qubits. This topology can be defined as the specific arrangement or configuration of connections between the individual qubits, which determines the nature of their interactions and correlations. Advantageously, the present invention allows for the dynamic adjustment of the predetermined topology to optimize the performance of the quantum computing tasks at hand. This adaptability enables the present invention to respond effectively to changing conditions and requirements during operation. As described hereafter, the present invention can be implemented in various quantum computing architectures, such as quantum dot arrays, superconducting circuits, or trapped ions, among others. The specific implementation details will depend on the chosen hardware platform and the desired quantum computing application.

The use of a quantum processing unit in the present invention allows for the creation of entangled states with enhanced fidelity, which can lead to improved performance in tasks such as image convolution. By aligning with the native operations of the hardware, the present invention enhances the efficiency and practicality of integrating entanglement into quantum-assisted Convolutional Neural Networks. This approach overcomes the challenges associated with creating and maintaining entanglement by harnessing the inherent capabilities of quantum processors.

In more details, and as illustrated by figures 6 and 7, the present invention relates to a computer-implemented method 100 for generating a dataset comprising quantum-generated images, using a quantum processing unit and a classical processing unit, the quantum processing unit comprising a plurality of qubits, the method comprising:

> A. Acquiring 110 at least one plurality of images, using at least one communication module 210, each image of the plurality of images comprising at least one associated data;

B. For each image of the plurality of images, dividing 120 the image into a plurality of sections, using the classical processing unit, each sections of the plurality of sections comprising a plurality of pixels ;

I. For each section of the plurality of sections of the image, creating 121 a quantum kernel configured to convolve the plurality of sections, using the quantum processing unit, the creating step of the quantum kernel comprising the following steps:

a. Encoding 122 a section into a plurality of local fields of a first Hamiltonian of a set of qubits of the plurality of qubits of the quantum processing unit, wherein each pixel of the plurality of pixels of the section is encoded into at least one local field of the plurality of local fields, encoding each pixel value into at least one local field comprising:

1. Applying a set of exciting pulses using a pulse generation module, each exciting pulse being associated with at least one qubit of the set of qubits, the set of exciting pulses being configured to :

- modify the plurality of local fields of the first Hamiltonian of the set of qubits to encode each pixel value into at least one local field, generating a second Hamiltonian;
- for each qubit of the set of qubit, generate entanglement with at least one another qubit of the set of qubits, using a predetermined topology of entanglement based on the connectivity of the qubits provided by the set of qubits;

b. Evolving 123 the second Hamiltonian according to the first Hamiltonian, using a quantum annealing process and the quantum processing unit, the first Hamiltonian being configured to govern the evolution of the set of qubits;
c. Determining 124 the ground state of the second Hamiltonian by measuring the expectation value of each qubit of the set of qubits in response to the second Hamiltonian stopping its evolution, using at least one measurement module;
d. Creating 125 at least one quantum-generated section using the expectation value of each qubit of the set of qubits as a pixel value of this quantum-generated section;

II. Obtaining 126 a plurality of quantum-generated sections based on the plurality of sections of the image;
III. Combining 127, using the classical processing unit, the plurality of quantum-generated sections to generate at least one quantum-generated image ;

C. Generating 130 a dataset of the quantum-generated images, using the classical processing unit.

In summary, the present invention provides a computer-implemented method for generating a dataset comprising quantum-generated images using a quantum processing unit and a classical processing unit. The present invention can be applied in various fields, such as medical image diagnosis, object detection, and pattern recognition, by leveraging the unique properties of quantum mechanics to improve feature extraction and classification performance.

According to an embodiment, the present invention comprises a step of training a Convolutional Neural Network (CNN) using the generated dataset of quantum-generated images for image classification. Preferably, each image of the plurality of images comprises a label, i.e. an associated data. Advantageously, the associated data comprises a label. The generated dataset is preferably prepared and configured for the purpose of training at least one Convolutional Neural Network. This dataset may consist of various quantum-generated images, each labeled with at least one corresponding class, for example.

Advantageously, the dataset is diverse in nature, encompassing a wide range of images to ensure comprehensive learning by the Convolutional Neural Network. According to another embodiment, the dataset is balanced, meaning that it contains an approximately equal number of quantum-generated images from each class of a plurality of classes to prevent bias during training, for example.

According to an embodiment, the trained Convolutional Neural Network can then be used for image classification tasks, where it is capable of accurately identifying and categorizing images based on their content. It should be noted that the Convolutional Neural Network may be a classical one, meaning it uses convolutional layers, pooling layers, fully connected layers, and activation functions to learn and classify images.

Furthermore, the present invention can be applied in various fields such as computer vision, medical imaging, and autonomous vehicles, among others.

According to an embodiment, the training of the Convolutional Neural Network can be implemented on various hardware platforms, including but not limited to CPUs, GPUs, and TPUs, depending on computational requirements and available resources.

According to an embodiment, each quantum-generated image within this dataset is individually identified and labeled with its corresponding associated data. This association ensures that the relevant information is correctly linked to its respective quantum-generated image. Preferably, the associated data for each image and each quantum-generated image may include various types of metadata such as a description of at least one object represented in the image, timestamps, geolocation, or any other pertinent details related to the image's origin or context. By associating the data with each quantum-generated image, the present invention enables efficient training of the Convolutional Neural Network

According to an embodiment, the training of the Convolutional Neural Network comprises using the plurality of quantum-generated images and their associated data as the dataset for the training. This training is for example executed by a classical processing unit. Preferably, the training utilizes the plurality of quantum-generated images and their associated data for pattern recognition and/or image classification tasks.

It is noted that the use of quantum-generated images in this context provides an opportunity to leverage the unique properties of quantum systems, leading to improved performance in pattern recognition and image classification tasks compared to traditional methods using images processed classically.

According to an embodiment, this training can involve adjusting the weights of the network based on the dataset and corresponding classification to minimize the error between predicted outputs and actual outputs. Advantageously, the trained Convolutional Neural Network is then employed for classifying at least one image. The image to be classified is input into the trained Convolutional Neural Network, which processes the image through a series of convolutional layers, pooling layers, and fully connected layers. Preferably, the output of the final layer of the Convolutional Neural Network represents a probability distribution over the possible classes for the given image. The class with the highest probability is selected as the predicted classification for the input image. It should be noted that the trained Convolutional Neural Network can be further fine-tuned or optimized to improve its performance on specific tasks or datasets. Additionally, the present invention may involve validating the performance of the trained Convolutional Neural Network on a separate validation dataset to ensure its generalizability and robustness.

According to an embodiment, the present invention comprises a step of classifying an image. This classifying step preferably comprises acquiring an image, for example using the communication module. Advantageously, the classification step initiates by obtaining an image that is to be classified. This image can be acquired from various sources such as digital cameras, scanners, or even obtained from a database or network.

Preferably, the classification step can be implemented in various systems, such as computers, smartphones, or specialized image processing devices. The classification step itself can employ various techniques, such as machine learning algorithms, pattern recognition, or rule-based systems, to categorize the acquired image based on predefined criteria.

According to an embodiment, the number of qubits in the set of qubits is equal to or greater than the number of pixels in a section of an image. Preferably, the set of qubits refers to a collection of quantum bits that can exist in multiple states simultaneously due to their quantum nature. These qubits are used for processing and storing information in a quantum computer or in a quantum processing unit. According to the present invention, each qubit of the set of qubit is used to encode the value of a pixel of a section of an image.

According to an embodiment, the plurality of qubits comprises at least one of:

- Neutral atoms: These are atoms that do not carry an overall electric charge and can be used as qubits due to their long coherence times and controllable interactions with laser light.
- Trapped ions: Ions confined in a trap can serve as qubits due to their long coherence times and the ability to perform precise manipulations using electromagnetic fields.
- Superconducting circuits: These are electrical circuits that exhibit zero electrical resistance below a certain critical temperature. They can be used as qubits due to their long coherence times and the ability to perform precise manipulations using microwave pulses.
- Photons: These are particles of light that can serve as qubits in quantum computing applications, particularly in linear optics quantum computing.

Advantageously, the choice of qubit type(s) may depend on various factors such as the desired coherence time, scalability, and compatibility with existing quantum hardware. Additionally, hybrid systems combining different types of qubits can also be envisioned to leverage their unique properties for improved performance in quantum computing applications.

According to an embodiment, the present invention comprises the measurement of expectation values of qubits. Preferably, the present invention involves initializing a qubit in a known state and applying a sequence of operations on the qubit to cause it to evolve towards its ground state. Advantageously, the sequence of operations may include one or more control pulses and/or gate operations applied to the qubit. These operations are designed to manipulate the quantum state of the qubit in a controlled manner, for example to encode the value of a pixel.

According to an embodiment, the method further involves measuring the expectation value of an observable associated with the ground state of each qubit of the set of qubits as it reaches its ground state. This measurement is performed by applying a suitable measurement operation on the qubit and recording the outcome.

According to an embodiment of the invention, the measurement operation is a projective measurement that projects the quantum state of the qubit onto one of the eigenstates of the observable associated with the ground state. The recorded outcome corresponds to the expectation value of the observable in the ground state of the qubit.

Advantageously, the method may further involve repeating the sequence of operations and measurement multiple times to obtain a statistically significant sample of measurements. This allows for the estimation of the expectation value with a desired level of accuracy.

According to an embodiment, the method is implemented on a quantum processing unit that comprises the set of qubits and control electronics for applying the sequence of operations and measuring the outcomes of the measurement operations. The control electronics may include hardware and/or software components for executing the desired sequence of operations and processing the recorded measurements to obtain an estimate of the expectation value.

According to an embodiment, the present invention is configured for controlling the evolution of a quantum system governed by a Hamiltonian.

According to an embodiment, the evolution of the Hamiltonian is halted when the Hamiltonian reaches its ground state. This feature allows for the stabilization of the quantum system at its lowest energy level.

Preferably, the present invention may involve monitoring the Hamiltonian's evolution until it reaches its ground state. This can be achieved through various techniques such as spectroscopy, interferometry, or other suitable measurement methods, for example.

In some embodiments, the system is subjected to external perturbations or manipulations to facilitate the transition to the ground state more efficiently. These perturbations could include magnetic fields, electric fields, or optical pulses, among others.

5. Optionally, the present invention can comprise the implementation of techniques for further control and manipulation of the system once it has reached its ground state. For instance, quantum gates in quantum computing or Bose-Einstein condensation in atomic physics could be utilized.

According to an embodiment, the quantum annealing process is implemented by at least one quantum annealing device. The quantum annealing device comprises preferably the quantum circuit, which is designed to undergo a quantum phase transition from an initial state to a final state that corresponds to a global minimum energy configuration, also called ground state, of an Hamiltonian. Advantageously, the quantum circuit is made of the set of qubits, each qubit of the set of qubits being capable of existing in multiple states simultaneously due to quantum superposition. Preferably, the quantum circuit can be connected to a classical control system, which is responsible for initializing the state of the qubits and monitoring their evolution during the annealing process. The classical control system can, for example, apply a time-dependent Hamiltonian to the quantum circuit, gradually changing it from an initial configuration that favors the high-energy states of the qubits, to a final configuration that favors the low-energy states corresponding to the quantum-generated section. The quantum annealing process is characterized by the gradual change in the Hamiltonian of the quantum circuit, allowing the system to find the global minimum energy configuration over time. Optionally, the quantum annealing device may comprise a feedback mechanism, which allows the classical control system to adjust the evolution of the quantum circuit based on the results obtained during the annealing process. According to an embodiment, the classical processing unit comprises the classical control system.

According to an embodiment, the quantum kernel refers to a digital quantum kernel or a digital-analog quantum kernel. The quantum kernel is preferably designed to perform computations using principles of quantum mechanics.

According to an embodiment, the digital quantum kernel utilizes qubits that are represented digitally, allowing for easier integration with classical computing systems.

According to an embodiment, the digital-analog quantum kernel employs a hybrid approach, where some qubits are interacting digitally and others are interacting analogically, offering potential advantages in terms of computational efficiency and flexibility.

Preferably, the quantum kernel is designed to be compatible with various quantum hardware platforms, such as superconducting qubits, trapped ions, and topological qubits, among others.

According to an embodiment, the present invention relates to a system configured for generating a dataset comprising quantum-generated images. The system comprises several components that work in concert to create and process these quantum-generated images.

Preferably, the system comprises the communication module designed to acquire a plurality of images. These images can be sourced from various sources, such as databases, cameras, or other image repositories.

Advantageously, the system comprises a classical processing unit that performs several tasks on the acquired images. Firstly, it divides an image into a plurality of sections, each section comprising a plurality of pixels. This division can be achieved using various methods, such as gridding or tessellation, and the size and number of sections can be adjusted according to the specific requirements of the task at hand.

Preferably, the classical processing unit is configured to a plurality of quantum-generated sections to generate at least one quantum-generated image. This process involves taking the output from the quantum processing unit and assembling it into a quantum-generated image.

Advantageously, the classical processing unit can also be configured to generate a dataset of quantum-generated images, which serves as the training data for subsequent machine learning tasks. This dataset can be stored in a suitable format, such as a file or database, for easy access and manipulation.

According to an embodiment, the system comprises a quantum processing unit that is responsible for creating and processing the quantum-generated sections. The quantum processing unit comprises a plurality of qubits and is configured to create a quantum kernel designed to convolve a plurality of sections of an image. This quantum kernel serves as the primary tool for performing convolutions on the plurality of images, leveraging the unique properties of quantum mechanics.

Preferably, to begin the process, each section is encoded into a plurality of local fields of a first Hamiltonian of a set of qubits from the plurality of qubits. Each pixel of the plurality of pixels in the section is encoded into at least one local field of the plurality of local fields. This encoding process can be achieved using various methods, such as digital gates or analog blocks, and the specific method used may depend on the quantum hardware being employed.

Advantageously, next, the system employs a quantum annealing process to evolve a second Hamiltonian according to the first Hamiltonian. The first Hamiltonian governs the evolution of the set of qubits, guiding them towards their final state based on the encoded pixel values. This process allows for the creation of entangled states among the qubits, which is useful for capturing complex relationships and patterns within the image.

Preferably, the system comprises a pulse generation module configured to apply a set of exciting pulses to the set of qubits. Each exciting pulse is associated with at least one qubit from the set of qubits, and the set of exciting pulses is configured to modify the plurality of local fields of the first Hamiltonian of the set of qubits to encode each pixel value of a plurality of pixel values into at least one local field. This process generates the second Hamiltonian, which encodes the section data in a quantum state.

For each qubit from the set of qubits, the pulse generation module can also generate entanglement with at least one another qubit from the set of qubits using a predetermined topology of entanglement based on the connectivity of the qubits provided by the set of qubits. This process allows for the creation of highly entangled quantum circuits, which is useful for capturing complex relationships and patterns within the section data.

Advantageously, the system comprises a measurement module configured to measure the expectation value of each qubit from the set of qubits. This process collapses the quantum state of each qubit into an observable value, which can then be used to create the final quantum-generated sections.

In certain embodiments, the system may incorporate additional components or steps to optimize its performance. For example, the classical processing unit may employ machine learning algorithms to train on the dataset of quantum-generated images and improve its ability to classify images based on their content. The quantum processing unit may also use digital-analog blocks to create more complex entanglement patterns that enhance the feature extraction process.

The system described above can find applications in various fields, such as medical image diagnosis, object detection, and pattern recognition. By leveraging the unique properties of quantum mechanics, this system offers improved performance over classical methods for certain tasks, particularly those involving complex relationships and patterns within image data.

According to an embodiment, in more details and as illustrated by figure 7, the present invention relates to a system 200 configured to generate a dataset comprising quantum-generated images, the system comprising at least:

A. One communication module 210 configured to acquire a plurality of images;
B. One classical processing unit 220 configured to:

I. divide an image into a plurality of sections, each section comprising a plurality of pixels;
II. combine a plurality of quantum-generated sections to generate at least one quantum-generated image;
III. generate a dataset of quantum-generated images;

C. One quantum processing unit 230 comprising a plurality of qubits and being configured to:

I. create a quantum kernel configured to convolve a plurality of sections;
II. encode a section into a plurality of local fields of a first Hamiltonian of a set of qubits of the plurality of qubits, wherein each pixel of the plurality of pixels of the section is encoded into at least one local field of the plurality of local fields;
III. evolve a second Hamiltonian according to a first Hamiltonian, using a quantum annealing process, the first Hamiltonian being configured to govern the evolution of the set of qubits;

D. One pulse generation module 240 configured to:

I. apply a set of exciting pulses, each exciting pulse being associated with at least one qubit of the set of qubits, the set of exciting pulses being configured to :

a. modify the plurality of local fields of the first Hamiltonian of the set of qubits to encode each pixel value of a plurality of pixel values into at least one local field, generating the second Hamiltonian;
b. for each qubit of the set of qubit, generate entanglement with at least one another qubit of the set of qubits, using a predetermined topology of entanglement based on the connectivity of the qubits provided by the set of qubits;

E. One measurement module 250 configured to measure the expectation value of each qubit of the set of qubits.

According to another embodiment, the object of the invention is to provide an improved method for image classification.

In a first aspect, the invention pertains to a computer-implemented method for image classification using a quantum computer with a quantum processing unit (QPU) and a plurality of qubits and a central processing unit (CPU). In certain embodiments, the method comprises one or all of the following steps:

- Encoding an input image into digital, single-qubit blocks in the QPU of the quantum computer, wherein each pixel of an input image is encoded into a single qubit from the plurality of qubits;
- Using analog blocks provided by the QPU of the quantum computer as native to create entanglement among the qubits;
- Generating a new image of the input image, comprising

a) using single or multiple digital analog quantum kernels (DAQK) by varying the topologies of the entangled qubits, and
b) measuring an observable of each qubit of the plurality of entangled qubits and computing an expectation value from the measured observables which is encoded into pixels of the new image; and

- Providing the new image as input to a classical Convolutional Neural Network to classify the input image.

The invention refers to a method for the implementation of entangled digital analog quantum kernels (DAQK) using analog quantum blocks, leveraging native operations of quantum hardware (neutral atoms). This method overcomes the challenges associated with creating and maintaining entanglement by harnessing the inherent capabilities of quantum processors. Analog quantum blocks, inherent to the quantum hardware, allow for the application of highly entangled states with enhanced fidelity. By aligning with the native operations of the hardware, the method enhances the efficiency and practicality of integrating entanglement into quantum-assisted Convolutional Neural Networks. This method does not only address the limitations posed by the difficulty of implementing fully entangled circuits, but also unlocks the true potential of quantum-enhanced feature extraction for image classification tasks.

Image classification is a pattern recognition that assigns categories to images based on the contextual information derived from their content. This approach is based on the significance of the spatial relationships between pixels, particularly those within a specified neighborhood. By analyzing these relationships, the method aims to utilize the contextual information, e.g., the texture, patterns, and shapes found in the image, to accurately classify an image into one of several predefined categories or sub-populations. Classification in the context of the invention is the problem of identifying which of a set of categories or sub-populations an observation belongs to.

In the realm of image classification, the process is mathematically underpinned by transforming the input image, represented as a matrix or tensor $I \in R^{W \times H \times C}$ for an image with width $W$, height $H$, and $C$ color channels, through a series of computational steps. Convolutional layers utilize kernels $K$ to perform convolutions across the image, producing feature maps $F(x, y) = \Sigma_{i,j} I(x - i, y - j) \cdot K(i,j)$, where $(i,j)$ spans the kernel dimensions, effectively capturing spatial relationships and patterns within the image. Non-linearity is introduced via activation functions, such as ReLU, applied to these feature maps, $F' = \sigma(F)$, to enable the learning of complex patterns where $F'$ is the output feature map after applying the activation function $\sigma$ to the input feature map $F$. Optional pooling operations, like max pooling $P(x, y) = \max_{(i,j) \in N(x,y)} F'(i, j)$, reduce feature map dimensions, aiding in computational efficiency and resistance to overfitting. The culmination of this process is a classifier, often a softmax function in the final layer, that outputs a probability distribution over classes, $S(z_i) = \frac{e^{z_i}}{\Sigma_j e^{z_j}}$,

for features *z*. Training of this architecture is achieved by minimizing a loss function, commonly cross-entropy $L(y, S(z)) = -\Sigma_i y_i log(S(z_i))$, comparing the predicted probabilities $S(z)$ to the actual labels *y*, through backpropagation and optimization algorithms like SGD or Adam. This mathematical framework underlies the capability of CNNs to classify images by learning from the complex interplay of pixels' spatial relationships.

A neutral atom quantum computer is a modality of quantum computers built out of Rydberg atoms. To perform computation, the atoms are trapped in a magneto-optical trap. Qubits are then encoded in the energy levels of the atoms. Initialization and operation of the computer is performed via the application of lasers on the qubits. The laser can accomplish, for example, arbitrary single qubit gates and a CZ gate for universal quantum computation. The CZ gate is carried out by leveraging the Rydberg blockade which leads to strong interactions when the qubits are physically close to each other. To perform a CZ gate a Rydberg $\pi$ pulse is applied to the control qubit, a $2\pi$ on the target qubit and then a $\pi$ on the control. Measurement is enforced at the end of the computation with a camera that generates an image of the outcome by measuring the fluorescence of the atoms.

A trapped-ion quantum computer is one in which ions, or charged atomic particles, are confined and suspended in free space using electromagnetic fields. Qubits are stored in stable electronic states of each ion, and quantum information can be transferred through the collective quantized motion of the ions in a shared trap. For single qubit operations, lasers are applied to induce coupling between the qubit states or, for entanglement between qubits, coupling between the internal qubit states and the external motional states.

The invention can involve digital quantum gates along with analog or native quantum gates to improve the accuracy of image classification.

Digital gates (also referred to as blocks) are realized in quantum hardware using electromagnetic pulses. For example, in trapped ion processors, lasers are used, in superconducting hardware microwave pulses are used and in neutral atoms optical tweezers and laser pulses are used.

Analog gates (blocks) are native to the hardware, i.e. they are hardware specific. For example, Ising spin interactions are available natively in trapped ion quantum hardware devices, and neutral atom quantum hardware devices. Furthermore, superconducting circuit-based devices can have $\sigma_i^k \sigma_j^l$ type of interactions, where $\sigma_i^k$ are Pauli matrices where *k = x, y or z*.

The optimal combination of the digital and analog gates produces a shallower circuit depth for a specific problem and improved accuracy. Moreover, it shows improved performance over classical models.

For improving image classification in Convolutional Neural Network (CNN) models, classical data is encoded into digital, single-qubit gates (i.e. each pixel is encoded into a single qubit) and, subsequently, analog blocks are applied as convolutions to produce new images as latent representation of the original image, capturing complex relationships between the features by entangling the qubits.

According to an embodiment, in the method, digital-analog blocks are used to produce highly entangled quantum circuits instead of purely digital circuits. Since the digital-analog blocks are native to the hardware, they present a substantially higher fidelity to its digital counterpart, since the digital implementation would require a large number of two-qubit interactions. The digital implementation for a similar operation would lead to a large circuit depth beyond the coherence time of the current generation of quantum computers.

The invention may involve machine learning in certain embodiments.

Applications of the invention include image classification problems, such as medical image diagnosis and healthcare in general, object detection, and several other pattern recognitions from images. The invention can be applied in finance, for instance, for recognizing counterfeit banknotes. It can also be applied in signal pattern recognition. The example below refers to medical image recognition as a possible application of the method of the invention.

Definitions

Quantum computing: It is a field of computation, which aims at outperforming classical computation by exploiting quantum mechanical phenomena. In this regard, it is necessary to introduce a qubit, which is a basic unit of quantum information.

Qubit: The qubit may be considered as the quantum analog of a classical bit. It is representative of a physical system that may be in two different states, generally denoted by |0) and 11), as well as in a superposition of those two states, e.g., $\frac{|0\rangle+|1\rangle}{\sqrt{2}}$ . This plays an important role in the development of quantum algorithms outperforming classical algorithms. One example of the physical device that may be used as a qubit is an electron spin.

Unitary operation: The time evolution of qubits is specified by a unitary operator acting on qubit states. The unitary operator plays the role of a gate in the quantum computing. In general, these gates are generated via some Hamiltonian that makes a qubit system to evolve in time.

Quantum circuit: A quantum circuit is a model for quantum computation in which a computation is a sequence of quantum gates, which are reversible transformations on a quantum mechanical analog of an n-bit register. This register consists of n qubits.

Circuit depth: It is defined as the number of parallel unitary operations that can be performed for a given algorithm to run on a given quantum hardware.

Coherence time: It is the duration over which a quantum system, such as a qubit in a quantum computer, maintains its quantum state without significant decoherence. Decoherence is the process by which a quantum system loses its quantum mechanical properties, typically due to interactions with its external environment, leading to the loss of superposition and entanglement. Coherence time sets a limit on the time available to perform quantum operations or computations before the quantum information is degraded.

Hamiltonian and k-local terms: A Hamiltonian is an operator representing the total energy of a quantum system, essential for describing the system's evolution over time. Particularly relevant are k-local Hamiltonians, where each term in the Hamiltonian involves interactions among at most k qubits. This concept is useful in the realm of quantum simulations and algorithms, as it realistically models physical systems which typically exhibit local interactions. For instance, a 2-local Hamiltonian includes terms that describe interactions between pairs of qubits but not three or more simultaneously.

Pauli operators: are represented by three 2x2 matrices, known as the Pauli matrices, each corresponding to a different quantum spin direction (x, y, and z) for a qubit. The operators and their matrices are as follows:

$$\sigma_x = \begin{bmatrix} 0 & 1 \\ 1 & 0 \end{bmatrix}, \sigma_y = \begin{bmatrix} 0 & -i \\ i & 0 \end{bmatrix}, \sigma_y = \begin{bmatrix} 1 & 0 \\ 0 & -1 \end{bmatrix}$$

Rydberg Hamiltonian: A well-known way to implement time-dependent multi-body quantum Hamiltonian operations is through Rydberg atoms, where dipole-dipole interactions can be mapped to spin Hamiltonians which has also been proposed for learning tasks. This Hamiltonian can be written as

$$H_{ryd}(t) = \frac{\Omega(t)}{2}\left(\cos\phi(t)\sum_i \sigma_i^x - \sin\phi(t)\sum_i \sigma_i^y\right) - \Delta(t)\sum_i \eta_i + \sum_{<ij>} J_{ij}\eta_i\eta_j.$$

Where $\sigma_i^{x(y)}$ are Pauli matrices, $\Omega(t)$ is the Rabi frequency, $\Delta(t)$ is the detuning of the energy levels and $\eta_i = I - \sigma_i^z$ where $I$ is the identity matrix.

Expectation value: It is the average of the measurable quantity of a quantum system which can include the energy, momentum or other dynamical quantity. It is obtained by the following relation

$$\frac{\langle\psi(t)|O(t)|\psi(t)\rangle}{|\langle\psi(t)|\psi(t)\rangle|^2}.$$

wherein $O$ (t) is the time dependent (or maybe independent) operator of interest and $\psi(t)$ is the time dependent wavefunction of the quantum system that determines its state at a particular time t.

Neutral atoms quantum computer: Neutral atom quantum computers utilize individual neutral atoms as qubits, controlled and manipulated using lasers and magnetic fields in ultra-high vacuum environments. This approach leverages the weak interaction of neutral atoms with electric fields to minimize environmental noise and decoherence, a major challenge in quantum computing. By trapping and cooling atoms to near absolute zero, initializing their quantum states, and precisely executing quantum logic gates through laser-induced interactions, these systems can perform complex computations that exploit quantum mechanics unique properties, such as superposition and entanglement. Neutral atom quantum computers promise scalability, long coherence times, and high-fidelity operations, positioning them as a compelling platform for advancing quantum computing's capabilities in solving problems beyond the reach of classical computers.

Quantum gate: A quantum gate is a fixed unitary evolution. An example is a multi-qubit operation:

$$U_N = e^{i\pi/4}\sigma_1^z\sigma_2^z \qquad\qquad (1).$$

Analog block: An analog block is a parametrized entangling unitary evolution with more than one parameter. An example is a two-parameter-dependent multiqubit operation in trapped ions (global MS gate) as

$$U_{MS}^n(\theta, \phi) = e^{-i\frac{\theta}{4}(cos\phi \, S_x + \, sin\phi \, S_y)^2} \qquad (3).$$

Where $S_{x(y)} = \sum_i \sigma_i^{x(y)}$ . In this invention, we make use of the Neutral atom quantum computers that offer analog blocks in the form of the Rydberg Hamiltonian unitary $e^{-i \int_0^T H_{ryd}(t)dt}$ .

Digital block:

A digital block is a fixed unitary evolution up to a set of local rotations upto 2-qubits. The examples are parameter-fixed entangling quantum gates and single qubit rotations with arbitrary angles as

$$U_N(\phi) = \left(e^{i\phi_1}\sigma_1^z \otimes e^{i\phi_2}\sigma_2^z\right)e^{i\pi/4}\sigma_1^z\sigma_2^z, \text{ and} \qquad (2).$$

$$U_i(\phi) = e^{i\phi}\sigma_1^z.$$

Trotterization: It is a technique used in quantum computing to simulate the evolution of quantum systems governed by Hamiltonians that are sums of non-commuting terms. It breaks down the exponential of a sum of operators into a product of exponentials of these operators, as $e^{(A+B)t} \approx \left(e^{\frac{At}{n}}e^{\frac{Bt}{n}}\right)^n$ allowing for an approximate simulation of the quantum system's dynamics. Here, $A$ and $B$ are, generally, non-commuting operators, $t$ represents time, and $n$ is the number of subdivisions or steps in the approximation. As $n$ approaches infinity, this approximation becomes exact. This method is based on the Trotter-Suzuki formula, which provides a way to approximate the evolution operator of the entire system through a sequence of simpler operations that are easier to implement on a quantum computer.

Methods of quantum computing: Among the approaches to do quantum computing, there are mainly two, analog and digital methods. The analog method aims to design the hardware to mimic a certain problem (Hamiltonian). While being high in accuracy, it has the disadvantage that it is specific to a given problem and lacks flexibility. In digital quantum computation (DQC), the digital quantum gates (single and two-qubit) are used to tune the hardware to reach a certain target Hamiltonian.

An alternative approach is Digital-Analog Quantum Computing (DAQC), which uses single and two qubit gates as digital blocks and multi-qubit gates as analog blocks aiming to solve the problem with fewer resources (reduced circuit depth) than is required by DQC. Moreover, due to reduced circuit depth it incurs less error in the simulation compared to the DQC paradigm and is more accurate.

Noisy intermediated scale (NISQ) devices: It refers to the current generation of quantum computers that are characterized by their relatively small number of qubits and the presence of noise and errors in their operations.

Problem encoding: Encoding a problem in quantum computing refers to the process of translating a specific computational problem or algorithm into a form that is suitable for a quantum computer to execute.

Neural network: A neural network, is a computational model inspired by the network of neurons in the human brain. It's designed to recognize patterns and solve complex problems in a way that mimics human thought processes. It consists of layers of nodes or neurons each of which can receive input, process it, and pass on output to subsequent layers. The basic structure includes an input layer, one or more hidden layers, and an output layer. Each neuron in a layer is connected to neurons in the next layer through "weights," which are adjusted during the training process to minimize the difference between the network's output and the desired output. This training process typically involves feeding the network a large amount of data so it can learn the relationships between inputs and outputs, a process known as "learning."

Convolutional neural networks: Convolutional Neural Networks (CNNs) have emerged as powerful tools for image classification tasks. These neural networks are specifically designed to process visual data, mimicking the human visual system's hierarchical organization. CNNs employ convolutional layers to automatically learn and extract relevant features from input images, capturing spatial hierarchies and patterns. This feature extraction is followed by pooling layers that downsample the spatial dimensions, reducing computational complexity while retaining essential information. The final layers typically consist of fully connected layers for classification. During the training process, CNNs adjust their parameters through backpropagation, optimizing their ability to recognize and classify patterns in images. The success of CNNs in image classification tasks can be attributed to their ability to automatically learn and hierarchically represent complex features, making them integral in various applications, from facial recognition to medical image analysis.

Quantum Convolutional neural networks: At the intersection of quantum computing and image classification, recent studies have explored the integration of quantum layers as a preprocessing step in Convolutional Neural Networks (CNNs). In these approaches, quantum layers are employed to encode image data into a quantum representation, leveraging quantum superposition and entanglement. This quantum-encoded latent representation is then fed into classical CNN layers for subsequent processing and classification. Such hybrid architectures aim to harness the computational advantages of quantum systems for certain data encoding tasks, potentially offering improvements in feature representation and subsequently enhancing the overall performance of image classification models. However, the implementation of fully entangled quantum circuits presents a challenge due to the increased complexity and resource demands. Achieving and maintaining entanglement across multiple qubits is a complex task, often requiring precise control and error-correction mechanisms. This difficulty in realizing fully entangled quantum circuits poses a practical limitation on the scalability and widespread applicability of quantum enhanced CNNs.

Image Classification: Image classification is a fundamental task in the field of computer vision that involves categorizing images into predefined classes or labels. The goal is to train a model that can accurately identify the class of new, unseen images based on the features learned during the training process. This process is widely used in various applications, such as facial recognition systems, medical image analysis, autonomous vehicles, and many more.

Kernel: A kernel is a function used to transform the input data into a higher-dimensional space. This transformation makes it easier to find a linear separation between different classes of data in case they are not linearly separable in the original space. Common examples include the linear kernel, polynomial kernel, and radial basis function (RBF) kernel. Kernels help in dealing with complex, non-linear relationships without explicitly computing the coordinates in a higher-dimensional space, thus saving computational resources.

CNN Kernel: A CNN (Convolutional Neural Network) kernel, also known as a filter or feature detector, is a fundamental component used in the convolutional layers of a CNN architecture. The kernel is essentially a small matrix of weights that slides (or convolves) over the input data (e.g., an image) to perform feature extraction by applying a dot product between the kernel and the local region of the input it covers at each position.

Quantum Kernel: In quantum machine learning, a quantum kernel is the quantum analog of these classical kernels. The idea is to use a quantum computer to project classical data into a quantum feature space (i.e., the state space of a quantum system) and then to compute the similarity between these quantum states. This approach can potentially exploit the high-dimensional state space of quantum systems to achieve better performance on certain tasks than classical kernel methods.

Digital analog quantum kernels (DAQK): In this context, digital analog quantum kernels (DAQK) are a combination of single-qubit digital gates - which encode classical information, analog blocks for entangling the qubits and measurements in the computational basis, which serve as information to classical CNN.

Single-DAQK: Uses a single entangling map for generating the new images. In Fig. 1, for example, it would represent only one of the multiple circuits shown. The number of quantum-generated images is restricted by the number of qubits.

Multi-DAQK: Uses multiple entangling maps for generating the new images. In Fig. 1, ifor example, t would represent all the multiple circuits shown. The number of quantum-generated images is restricted by the number of qubits multiplied by the number of different entangling maps.

Entangling map: An entangling map in the context of quantum information and quantum computing refers to a quantum operation that takes a separable (i.e., non-entangled) state of two or more quantum systems and transforms it into an entangled state. Entanglement is a fundamental property of quantum mechanics, where the states of two or more quantum systems become intertwined in such a way that the state of one system cannot be described independently of the state of the others, even when the systems are spatially separated.

Model Complexity: It is defined as the complexity of the function in the output layer of the machine learning model. This is characterized by the number of terms in the output layer. It helps to fit more complex data.

AUC (Area Under the ROC Curve) is a performance metric used to evaluate the effectiveness of a binary classification model. It measures the area under the ROC (Receiver Operating Characteristic) curve, which plots the true positive rate (sensitivity) against the false positive rate (1 - specificity) at various threshold settings.

- AUC values range from 0 to 1:

    AUC = 1: Perfect classifier.
    AUC = 0.5: Random guess (no predictive power).
    AUC < 0.5: Worse than random guessing.

The AUC score provides an aggregate measure of the model's performance across all classification thresholds, with higher values indicating better model performance in distinguishing between the two classes.

In the context of a CNN, AUC is used as a performance metric to evaluate how well the CNN distinguishes between classes, particularly in binary classification tasks (e.g., distinguishing between "cat" and "dog" or between "disease" and "no disease").

Topology of entangled qubits: It refers to a particular geometry or graph formed by entangled qubits as in Fig.1.

Quantum layer: This refers to a component within a quantum neural network (QNN) or a hybrid quantum-classical machine learning model. In these contexts, quantum layers operate similarly to layers in classical neural networks but process and transform information using quantum mechanics principles.

**Examples**

Dataset preparation and selection: The computational experiments were conducted using publicly available datasets of medical images, specifically the MedMNIST dataset. In particular, data was utilized for breast cancer classification, where the images have dimensions of 28x28 pixels. A total of 546 data points were used for training, 156 for testing, and 78 for validation.

Application of Digital-Analog Blocks: The quantum circuit employs digital-analog blocks, native to neutral atom systems. These blocks enable the entanglement of atoms in specific patterns, determined by a predefined connectivity graph. The primary quantum operation utilized my be derived from the Rydberg Hamiltonian, facilitating the convolution of input data through the system.

Feature Extraction via Quantum Entanglement: By entangling atoms in various configurations, the method captures complex relationships and patterns within the image data, significantly enhancing the feature extraction process. Different configurations, including single and multiple circuit setups with varying kernel sizes (2x2 and 3x3), are experimented with to optimize the extraction process.

Integration with Classical Machine Learning: After quantum processing, the method involves measuring the expected value of an observable for each qubit, translating these quantum measurements into classical information. This information is then used to create new images, which are subsequently flattened in certain embodiments and fed into a, for example, classical dense neural network. This network includes two fully connected hidden layers, allowing for the integration of quantum-processed data with traditional machine learning architectures.

Computational Experiments run on neutral atom quantum simulator:

Different experiments have been performed over the same data set (breast MedMNIST), changing the size of the kernel, the quantum circuits used (as can be seen in Figure 1, more than a single circuit can be used to extract different information) and the number of resulting images obtained in the quantum preprocessor (as many as qubits are measured).

The different cases are described below:

1. 2x2 kernel size, using a single circuit (King's circuit), measuring all qubits (4 resultant images).
2. 2x2 kernel size, using 4 different circuits, measuring all qubits (16 resultant images, 4 in each circuit).
3. 2x2 kernel size, using 4 different circuits, measuring a single qubit in each circuit (4 resultant images).
4. 3x3 kernel size, using a single circuit (King's circuit), measuring all qubits (9 resultant images).
5. 3x3 kernel size, using 4 different circuits, measuring all qubits (36 resultant images, 9 in each circuit).
6. 3x3 kernel size, using 4 different circuits, measuring a single qubit in each circuit (4 resultant images).

The following explains the particular case of the 2x2 kernel size, using a single circuit (King's circuit), measuring all qubits (4 resultant images).

Hyperparameters and layers: The kernel size employed was 2x2 (corresponding to 4 qubits in the case of the quantum layer). The pixel values traverse through the digital-analog quantum circuit, and the expected value of an observable in each qubit (channel) is individually measured. These values are then stored in new images (4 new images, as 4 qubits were measured, as showed in Figure 2). Subsequently, these 4 new images are flattened and passed through a classical dense neural network with two fully connected hidden layers. The classical counterpart contains the same configuration, except that a classical convolutional layer is applied in the raw image instead of a quantum one.

The digital-analog blocks considered in this experiment were the native blocks of neutral atom systems by companies such as PASQAL and QuEra. As depicted in Figure 1, pixels from the original input image need to be encoded in the circuit through digital operations with individual control over the atoms, which is an anticipated feature in the upcoming generations of neutral atom quantum computers. Subsequently, digital-analog blocks are applied to perform the convolution of the input data. In this experiment, a configuration was considered where atoms are entangled in a circular manner, with the connectivity map given by a graph G = {(0,1), (1,2), (2,3), (3,0)}. The unitary operation used as the digital-analog block was given by

$$U(\tau) = e^{-i \int_0^\tau H_{ryd}(t)dt},$$

which can be derived from the Rydberg Hamiltonian, given by

$$\frac{H_{ryd}(t)}{\hbar} = \frac{\Omega(t)}{2}\underbrace{\left[\cos\varphi(t)\sum_{i=1}^{N}\sigma_i^x - \sin\varphi(t)\sum_{i=1}^{N}\sigma_i^y\right] - \Delta^g(t)\sum_{i=1}^{N}n_i}_{H_{\text{driving}}} \underbrace{- \sum_{i=1}^{N}\Delta_i^l(t)n_i}_{H_{\text{local}}} + \underbrace{\sum_{i<j}J_{i,j}\,n_i n_j}_{H_{\text{Ising}}}, (1)$$

wherein

the analog quantum computer uses neutral atom Rydberg qubits,

$\sigma_i^x, \sigma_i^y$ are Pauli X and Y operators on qubit $i$, $n_i = (1 - \sigma_i^z)/2$ and $\sigma_i^z$ is Pauli Z operator acting on the ith qubit

$\Omega(t)$ is the Rabi frequency which describes the rate at which qubits transition between their two states when driven by an external oscillating field generated by a coupling laser, and is dynamically controlled by controlling the power of a coupling laser,

$\Delta^g(t)$ corresponds to the global detuning which represents the energy difference between the two states of the qubit with regards to a two-photon transition and is changed dynamically by the dynamic control of the global laser,

$\Delta_i^l(t)$ is the local detuning which represents the frequency shift locally on the i-th qubit.

In certain embodiments, it is controlled experimentally in the following format: $\Delta_i^l(t) = \Delta^l(t)h_i$ where $\Delta^l(t)$ can be time-dependent function and $h_i$ is time-independent qubit-dependent pattern.

$\varphi(t)$ is the phase of at least one coupling laser, and

the term containing $J_{i,j}$ is an interaction term between an atom *i* and an atom *j* defined by a Rydberg blockade mechanism and is site-dependent or dynamically tuned,

$\hbar$ is the Planck constant. In certain embodiments, it is set to be $\hbar = 1$ to simplify the calculation.

Implementing the DAQC circuits in the neutral atom hardware

In order to implement the algorithm in the current generation of neutral atom hardware (QPU), namely, ground-Rydberg with possibility of local detuning, Figure 5 illustrates an examplary means of how to transform the locally-addressed Ry rotations into locally-addressed Rz rotations, which can be implemented via a local detuning. In this manner, the following four sequences need to be implemented:

   1. **Global Rx rotations:** These can be achieved by setting

      a.

$$\Omega(t) = \frac{\pi}{2T},$$

    where

      i. T is the gate time within the coherence time of the device.

      b.

$$\varphi(t) = \pi$$

c.

$$\Delta^g(t) = 0$$

d.

$$\Delta_k^l(t) = h_k \frac{1}{2} \max_k V_k \text{ , where}$$

    i.

$$V_k = \sum_{\substack{i \\ (i \neq k)}} J_{ij}$$

    ii.

$$h_k = \frac{V_k}{\max_n V_n}$$

**2. Local Rz rotations:** These can be achieved by setting

    a.

$$\Omega(t) = 0$$

    b.

$$\varphi(t) = 0$$

    c.

$$\Delta^g(t) = \min_k \left( \frac{1}{2} V_k + \frac{1}{T} \left( \phi_k + \frac{\pi}{2} \right) \right) ,$$

where

    i. *T* is the gate time, within the coherence time of the device.
    ii. $\phi_k$ is the rotation angle
    iii.

$$V_k = \sum_{\substack{i \\ (i \neq k)}} J_{ij}$$

    d.

$$\Delta_k^l(t) = h_k \max_n \left( \frac{1}{2} V_n + \frac{1}{T} \left( \phi_n + \frac{\pi}{2} \right) \right) ,$$

where

    i. *T* is the gate time, within the coherence time of the device.
    ii. $\phi_n$ is the rotation angle
    iii.

$$V_n = \sum_{\substack{i \\ (i \neq n)}} J_{ij}$$

iv.

$$h_k = \frac{\frac{1}{2}V_k + \frac{1}{T}\left(\phi_n + \frac{\pi}{2}\right)}{\max_n\left(\frac{1}{2}V_n + \frac{1}{T}\left(\phi_n + \frac{\pi}{2}\right)\right)}$$

**3. Analog block:** These can be achieved by setting but not limited to

a.

$$\Omega(t) = \Omega_0 \sin^2\left(\frac{\pi}{2}\sin\frac{\pi t}{T}\right),$$

where

i. $\Omega_0$ is the maximum amplitude the Rabi frequency reaches.

ii. $T$ is the gate time, within the coherence time of the device.

b.

$$\Delta^g(t) = -\Delta_0 \cos\left(\frac{\pi t}{T}\right),$$

where

i. $\Delta_0$ is the maximum amplitude the detuning reaches.
ii. $T$ is the gate time, within the coherence time of the device.

c.

$$\Delta^l(t) = 0$$

These pulses are particularly designed for currently available hardware.

In certain embodiments, the method using a central processing unit (CPU) and a quantum processing unit (QPU) comprises the following steps:

- Step 1: Given the image-based data set, choose integer numbers for defining the kernel size (a squared matrix as default, encoding a subset of nxn pixels from the original images) and stride (step size in pixels).

- Step 2: In one image, flatten all the subsets of nxn pixels according to the selected stride number in order to pass it to the digital-analog quantum kernel.

- Step 3: Do the same for all the images in the data set

- Step 4: After Step 1-4 by using a QPU, measure the digital-analog quantum kernel to obtain a set of expectation values of the Pauli-Z operators for each qubit, for each flattened subset of pixels from Step 2.

- Step 5: Generate new images with the information obtained in Step 4. Each qubit measurement produces an expectation value which will turn into a pixel value for creating the new images.

- Step 6: Use the new, quantum-generated images to train a classical machine learning model for classification. As default, we used a shallow convolutional neural networks with 2 convolutional layers and 1 fully-connected layer with 2 output nodes to perform the binary classification.

- Step 7: The flattened subset from the original images obtained in Step 2 and Step 3 by using a CPU is passed to a quantum feature map by using a pulsed local addressing which tries to mimic pure single-qubit rotations.

- Step 8: An analog block is applied in order to create entanglement between the qubits.

- Step 9: Measurements on the computational basis is performed on each qubit. This process is repeated for every image on the data set and the probabilities obtained from the measurements are used on the Step 4 by using a CPU.

Certain embodiments of the method of the invention may address the problem of improving image classification in Convolutional Neural Network which encodes the solution to a medical image diagnosis problem.

Model performance: To assess the method's performance and compare it with the results of a public benchmark, the evaluated metrics included AUC (Area Under the ROC Curve) and test accuracy (ACC). Figure 3 illustrates the ROC curve, and Table 1 presents the model performances. Additionally, Table 1 shows the performance of the pulsed protocol as described above. For this particular case, the quantum computing python library PennyLane was used. It can be observed that the method of the invention using a digital-analog quantum layer outperforms the values obtained from a benchmark available on the MedMNIST website.

Table 1

| Model | AUC | ACC |
|---|---|---|
| Digital-analog quantum CNN (3x3 kernels and pure single-qubit rotations) | 0.919 | 0.858 |
| Equivalent Classical CNN | 0.903 | 0.885 |
| Pulsed Digital-analog quantum CNN (3x3 kernels) | 0.921 | 0.885 |

While the test accuracy is similar between the quantum model of the invention and its classical counterpart, the quantum model significantly outperforms in terms of AUC. AUC is a more reliable metric for unbalanced data, because it takes into account both true positive and false positive rates. In unbalanced datasets, where one class may be much more prevalent than the other, accuracy can be misleading as a classifier that simply predicts the majority class may appear to have high accuracy. AUC, on the other hand, assesses the method's ability to distinguish between classes, even in imbalanced situations, making it a more robust and informative metric in such circumstances.

The Table 2 displays the best ACC and AUC results following a search for optimal hyperparameters, employing a known grid search technique. The hyperparameters considered in the search included: activation function, learning rate, and dropout.

Table 2

| Model | AUC | ACC |
|---|---|---|
| 2x2 kernel, single circuit, measuring all qubits | 0.909 | **0.891** |
| 2x2 kernel, 4 circuits, measuring all qubits | 0.919 | 0.872 |
| 2x2 kernel, 4 circuits, measuring a single qubit | 0.921 | 0.858 |
| 3x3 kernel, single circuit, measuring all qubits | 0.912 | 0.878 |
| 3x3 kernel, 4 circuits, measuring all qubits | **0.927** | 0.877 |
| 3x3 kernel, 4 circuits, measuring a single qubit | 0.902 | 0.853 |

The results of the best digital-analog quantum CNN are also compared with the bench marking of the best current models (Table 3).

Table 3

| Model | AUC | ACC |
|---|---|---|
| Digital-analog quantum CNN | **0.927** | **0.877** |
| ResNet-18 (28) | 0.901 | 0.863 |
| ResNet-18 (224) | 0.891 | 0.833 |

(continued)

| Model | AUC | ACC |
|---|---|---|
| ResNet-50 (28) | 0.857 | 0.812 |
| ResNet-50 (224) | 0.866 | 0.842 |
| Auto-sklearn | 0.836 | 0.803 |
| AutoKeras | 0.871 | 0.831 |
| Google AutoML Vision | 0.919 | 0.861 |

**Claims**

1. A computer-implemented method (100) for generating a dataset comprising quantum-generated images, using a quantum processing unit (230) comprising a plurality of qubits and a classical processing unit (220), the method comprising:

   A. Acquiring (110) a plurality of images using a communication module (210), each image of the plurality of images comprising at least one associated data;
   B. For each image of the plurality of images, dividing (120) the image into a plurality of sections, using the classical processing unit (220), each sections of the plurality of sections comprising a plurality of pixels;

   I. For each section of the plurality of sections of the image, creating (121) a quantum kernel configured to convolve the plurality of sections, using the quantum processing unit (230), the creating step of the quantum kernel comprising the following steps:

   a. Encoding (122) a section into a plurality of local fields of a first Hamiltonian of a set of qubits of the plurality of qubits of the quantum processing unit (230), wherein each pixel of the plurality of pixels of the section is encoded into at least one local field of the plurality of local fields, encoding each pixel value into at least one local field comprising:

   1. Applying a set of exciting pulses using a pulse generation module (240), each exciting pulse being associated with at least one qubit of the set of qubits, the set of exciting pulses being configured to :

   • modify the plurality of local fields of the first Hamiltonian of the set of qubits to encode each pixel value into at least one local field, generating a second Hamiltonian;
   • for each qubit of the set of qubit, generate entanglement with at least one another qubit of the set of qubits, using a predetermined topology of entanglement based on the connectivity of the qubits provided by the set of qubits;

   b. Evolving (123) the second Hamiltonian according to the first Hamiltonian, using a quantum annealing process and the quantum processing unit (230), the first Hamiltonian being configured to govern the evolution of the set of qubits;
   c. Determining (124) the ground state of the second Hamiltonian by measuring the expectation value of each qubit of the set of qubits in response to the second Hamiltonian stopping its evolution, using at least one measurement module (250);
   d. Creating (125) at least one quantum-generated section using the expectation value of each qubit of the set of qubits as a pixel value of this quantum-generated section;

   II. Obtaining (126) a plurality of quantum-generated sections based on the plurality of sections of the image;
   III. Combining (128), using the classical processing unit (220), the plurality of quantum-generated sections to generate at least one quantum-generated image; and

   C. Generating (130) a dataset of the quantum-generated images, using the classical processing unit (220).

2. The method (100) according to claim 1, wherein the generated dataset is configured to train at least one classical Convolutional Neural Network for image classification.

3. The method (100) according to claim 1 or 2, comprising, after generating (130) the dataset for each quantum-generated image of the plurality of images, associating the associated data of each image of the plurality of images with its corresponding quantum-generated image.

4. The method (100) according to any one of the previous claims, comprising, after generating (130) the dataset, a step of training at least one classical Convolutional Neural Network, using a classical processing unit, using the plurality of quantum-generated images and the associated data of the plurality of images to recognize patterns and/or perform image classification tasks.

5. The method (100) according to any one of the previous claim, comprising, after training the classical Convolutional Neural Network, a step of classifying at least one image using the trained classical Convolutional Neural Network.

6. The method (100) according to any one of the previous claim, comprising, before the step of classifying, a step of acquiring an image to be classified, using the communication module.

7. The method (100) according to any one of the previous claims, wherein the number of qubits of the set of qubits is equal or higher than the number of pixels of the section.

8. The method (100) according to any one of the previous claims, wherein the exciting pulses comprises at least one of a microwave pulse or a laser pulse.

9. The method (100) according to any one of the previous claims, wherein the plurality of qubits comprises at least one of neutral atoms, trapped ions, superconducting circuits or photons.

10. The method (100) according to any one of the previous claims, wherein the evolution of the Hamiltonian is stopped when the Hamiltonian reaches its ground state.

11. The method (100) according to any one of the previous claims, wherein the quantum kernel is a digital quantum kernel or a digital-analog quantum kernel.

12. The method (100) according to any one of the previous claims, wherein the predetermined topology of entanglement is related to the nature of the plurality of qubits.

13. A system (200) configured to generate a dataset comprising quantum-generated images, the system comprising:

A. A communication module (210) configured to acquire a plurality of images;
B. A classical processing unit (220) configured to:

I. divide an image into a plurality of sections, each section comprising a plurality of pixels;
II. combine a plurality of quantum-generated sections to generate at least one quantum-generated image; and
III. generate a dataset of quantum-generated images;

C. A quantum processing unit (230) comprising a plurality of qubits and configured to:

I. create a quantum kernel configured to convolve a plurality of sections;
II. encode a section into a plurality of local fields of a first Hamiltonian of a set of qubits of the plurality of qubits, wherein each pixel of the plurality of pixels of the section is encoded into at least one local field of the plurality of local fields; and
III. evolve a second Hamiltonian according to a first Hamiltonian, using a quantum annealing process, the first Hamiltonian being configured to govern the evolution of the set of qubits;

D. A pulse generation module (240) configured to:

I. apply a set of exciting pulses, each exciting pulse being associated with at least one qubit of the set of qubits, the set of exciting pulses configured to:

a. modify the plurality of local fields of the first Hamiltonian of the set of qubits to encode each pixel value of a plurality of pixel values into at least one local field, generating the second Hamiltonian; and

b. for each qubit of the set of qubit, generate entanglement with at least one another qubit of the set of qubits, using a predetermined topology of entanglement based on the connectivity of the qubits provided by the set of qubits; and

E. A measurement module (250) configured to measure the expectation value of each qubit of the set of qubits.

14. Use of the method of any of claims 1 to 12 for classifying a medical image as belonging to a first class or to a second class, the first class corresponding to the presence of a cancer, the second class corresponding to an absence of the cancer.

15. Use of a dataset generated by a method according to any of claims 1 to 12 for training a classical Convolutional Neural Network for image classification.

**Figure 1**

**Figure 2**

**Figure 3**

ROC curve for breast medmnist

**Figure 4**

**Figure 5**

**Figure 6**

100

| 110 – Acquiring at least one plurality of images |
| :---: |

| 120 – For each image of the plurality of images, dividing the image into a plurality of sections |
| :---: |

| 121 – For each section of the plurality of sections of the image, creating a quantum kernel configured to convolve the plurality of sections |
| :---: |

| 122 – Encoding a section into a plurality of local fields of a first Hamiltonian of a set of qubits |
| :---: |

| 123 – Evolving the second Hamiltonian according to the first Hamiltonian |
| :---: |

| 124 – Determining the ground state of the second Hamiltonian |
| :---: |

| 125 – Creating at least one quantum-generated section |
| :---: |

| 126 – Obtaining a plurality of quantum-generated sections |
| :---: |

| 127 – Combining the plurality of quantum-generated sections |
| :---: |

| 130 – Generating a dataset of the quantum-generated images |
| :---: |

**Figure 7**

200

210 – Communication module

220 – Classical processing module

230 – Quantum processing module

240 – Pulse generation module

250 – Measurement module

Europäisches
Patentamt

European
Patent Office

Office européen
des brevets

# EUROPEAN SEARCH REPORT

**Application Number**

EP 24 21 7619

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ANTON SIMEN ET AL: "Digital-analog quantum convolutional neural networks for image classification", ARXIV.ORG, CORNELL UNIVERSITY LIBRARY, 201 OLIN LIBRARY CORNELL UNIVERSITY ITHACA, NY 14853, 1 May 2024 (2024-05-01), XP091744353, | 15 | INV.<br>G06N3/0464<br>G06N3/084<br>G06N10/60<br>G06V10/36<br>G06N10/40 |
| A,P | * abstract; figure 1 *<br>* I. INTRODUCTION *<br>* II. DIGITAL-ANALOG QUANTUM CONVOLUTIONAL NEURAL NETWORKS (DAQCNN) * | 1-14 | |
| A,P | GOLCHHA ROOPA ET AL: "Leveraging Quantum computing for synthetic image generation and recognition with Generative Adversarial Networks and Convolutional Neural Networks", INTERNATIONAL JOURNAL OF INFORMATION TECHNOLOGY, vol. 16, no. 5, 9 April 2024 (2024-04-09), pages 3149-3162, XP093245017, ISSN: 2511-2104, DOI: 10.1007/s41870-024-01835-9 Retrieved from the Internet: URL:https://link.springer.com/article/10.1007/s41870-024-01835-9/fulltext.html><br>* abstract; figure 4 * | 1-15 | |

**TECHNICAL FIELDS SEARCHED (IPC)**

G06N
G06V

The present search report has been drawn up for all claims

| Place of search | Date of completion of the search | Examiner |
|---|---|---|
| The Hague | 30 January 2025 | De Meyer, Arnaud |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document